Europäisches Patentamt

European Patent Office

Office européen des brevets

(11) Veröffentlichungsnummer: **0 329 149**
**A2**

(12) **EUROPÄISCHE PATENTANMELDUNG**

(21) Anmeldenummer: 89102709.6

(22) Anmeldetag: 17.02.89

(51) Int. Cl.⁴: **B01D 53/34**

(30) Priorität: 19.02.88 DE 3805282

(43) Veröffentlichungstag der Anmeldung:
23.08.89 Patentblatt 89/34

(84) Benannte Vertragsstaaten:
BE DE FR IT

(71) Anmelder: Wacker-Chemitronic Gesellschaft
für Elektronik-Grundstoffe mbH
Johannes-Hess-Strasse 24
D-8263 Burghausen(DE)

(72) Erfinder: Prigge, Helene, Dr. Dipl.-Chem.
Münchner Ring 2
D-8044 Unterschleissheim(DE)
Erfinder: Rurländer, Robert
Thalhausen 13
D-8269 Halsbach(DE)
Erfinder: Schwab, Michael, Dr. Dipl.-Chem.
Feldstrasse 16
D-8265 Neuötting(DE)
Erfinder: Bortner, Hans Peter, Dr. Dipl.-Chem.
Badhöringer Strasse 11
D-8263 Burghausen(DE)
Erfinder: Englmüller, Andreas, Dr. Dipl.-Chem.
Kapuzinergasse 237
D-8263 Burghausen(DE)

(54) Verfahren zur Entfernung von n-dotierenden Verunreinigungen aus bei der Gasphasenabscheidung von Silicium anfallenden flüssigen oder gasförmigen Stoffen.

(57) Die bei der Gasphasenabscheidung von Silicium anfallenden flüssigen oder gasförmigen Stoffe wie Wasserstoff oder Trichlorsilan können n - dotierende Verunreinigungen enthalten, welche sich durch Adduktbildung mit Silicium-, Titan- oder Zinnhalogeniden entfernen lassen. Aus den Addukten können durch thermische Behandlung die Verunreinigungen freigesetzt und schließlich aufgearbeitet werden. Die verbleibenden Halogenide sind erneut zur Adduktbildung befähigt und werden wieder zur Entfernug der Verunreinigungen eingesetzt. Das Verfahren kann somit im Kreislauf betrieben werden und zeichnet sich durch geringen Chemikalienbedarf und Umweltfreundlichkeit aus.

# Verfahren zur Entfernung von n - dotierenden Verunreinigungen aus bei der Gasphasenabscheidung von Silicium anfallenden flüssigen oder gasförmigen Stoffen.

Die Erfindung betrifft ein Verfahren zur Entfernung von n -dotierenden Verunreinigungen aus bei der Gasphasenabscheidung von Silicium anfallenden flüssigen oder gasförmigen Stoffen oder Stoffgemischen.

Für die Herstellung von polykristallinem Reinstsilicium durch Gasphasenabscheidung, z.B. durch Zersetzung von flüchtigen Siliciumverbindungen auf erhitzten Tragerkörpern aus Silicium nach dem Siemens-Prozeß oder in Wirbelschichtverfahren auf Siliciumpartikeln, ist die größtmögliche Reinheit der beteiligten Stoffe unerläßlich. Grundvoraussetzung ist insbesondere, daß elektrisch aktive Verunreinigungen, die im Sinne einer unerwünschten Dotierung wirken können, so weit als möglich ausgeschlossen werden. Dabei ist vor allem auf n - dotierende Verunreinigungen zu achten, die beispielsweise in Form von flüchtigen Verbindungen von Elementen der fünften Hauptgruppe des Periodensystems, z.B. als Halogen-oder insbesondere Wasserstoffverbindungen des Phosphors oder Arsens auftreten können. Quellen für solche Verunreinigungen können beispielsweise Ausgangsmaterialien wie das zur Herstellung von Trichlorsilan mit Chlorwasserstoff umgesetzte stückige Rohsilicium sein, welches im allgemeinen mit stählernen Backenbrechern zerkleinert wird und dabei mit Abrieb aus beispielsweise phosphorhaltigem Stahl kontaminiert werden kann, oder auch bereits vorher geringe Phosphor- oder Arsenspuren enthalten kann. Auch aus Gefäßwandungen oder Rohrleitungen aus Edelstahl können durch die oftmals sehr aggressiven Stoffe wie Silane, Halogensilane, Siliciumhalogenide, Chlorwasserstoff oder Wasserstoff, die beim Prozeß der Gasphasenabscheidung von Silicium als Ausgangs- oder Endprodukte in flüssiger oder Gasform anfallen, derartige in Spuren vorhandene Verunreinigungen in geringem Maße aufgenommen werden.

Bei der eigentlichen Abscheidungsreaktion, bei der beispielsweise ein Gemisch aus Wasserstoff und flüssigem oder gasförmigem Trichlorsilan unter Bildung von elementarem Silicium (neben großen Mengen Siliciumtetrachlorid, Chlorwasserstoff sowie nicht abreagierten Ausgangsverbindungen) umgesetzt wird, werden die n - dotierenden Verunreinigungen aufgrund der verschiedenen Verteilungsgleichgewichte in geringerem Maße in das abgeschiedene Silicium eingebaut und reichern sich daher in der Gasphase an. Dieser eigentlich günstige Effekt wirkt sich jedoch dann nachteilig aus, wenn die an sich wertvollen als Endprodukte anfallenden Gase erneut in den Abscheidungsprozeß eingespeist werden sollen, da die Anreicherung dann immer mehr zunimmt und schließlich zu einer untragbaren Kontamination führt. Ein Beispiel dafür ist die sogenannte Tertrakonvertierung, bei der in einem Kreislauf das anfallende Siliciumtetrachlorid zu Trichlorsilan rückverwandelt wird, welches dann erneut in den Abscheidereaktor eingespeist werden kann (vgl. hierzu z.B. die DE-OS 30 24 320 bzw. die entsprechende US-PS 45 36 642). Auch bei Verfahren, bei denen der nicht umgesetzte Wasserstoff (z.B. gemäß der DE-OS 31 39 705 bzw. der entsprechenden US-PS 44 54 104) in den Abscheidereaktor zurückgeführt wird, kann es zu einer solchen Anreicherung kommen. In vielen Fällen wird daher bei der Gasphasenabscheidung von Reinstsilicium auf den wegen des erheblich verringerten Materialverbrauchs an sich schon aus Kostengründen und aus Gründen des Umweltschutzes wünschenswerten Einsatz von solchen Kreisläufen entweder ganz verzichtet oder nur in geringem Maße zurückgegriffen.

Zwar ist aus der GB-A-975000 ein Verfahren bekannt, nach dem sich flüssige Halosilane oder Halogermane von phosphorhaltigen Verunreinigungen wie Phosphorwasserstoff oder Phosphortrichlorid befreien lassen, indem diese in einem ersten Schritt in den fünfwertigen Zustand überführt und dann mit zugegebenem flüssigem Titan- oder Zinntetrachlorid zur Reaktion gebracht werden, wobei sich ein fester Komplex bildet, der schließlich abgetrennt werden kann. Dieser Prozeß beschränkt sich jedoch nur auf flüssige Komponenten und ist aufwendig, da er nicht nur einen Oxidationsschritt, sondern auch nach der Abtrennung des festen Komplexes die sorgfältige Trennung des gebildeten Flüssigkeitsgemisches erfordert sowie keine Wiederverwendung der beteiligten Reagenzien vorsieht.

Die Aufgabe der Erfindung lag darin, ein demgegenüber einfacheres Verfahren anzugeben, das auch bei gasförmigen Komponenten eingesetzt werden kann, sich durch geringen Chemikalienbedarf auszeichnet und in umweltfreundlicher Weise betrieben werden kann.

Gelöst wird die Aufgabe durch ein Verfahren, welches dadurch gekennzeichnet ist,
daß die Stoffe eine Reinigungsstation durchlaufen, in der sie mit vorgelegten Halogeniden der Elemente Silicium, Titan oder Zinn in Kontakt gebracht werden, wobei ihnen durch Bildung von Addukten die Verunreinigungen entzogen werden,
daß spätestens bei ihrer Sättigung mit Addukten die vorgelegten Halogenide zumindest teilweise in einer Regenerierstation einer Temperaturbehandlung unterworfen werden, bei der die Addukte zumindest teilweise gespalten und die dabei freigesetzten Verunreinigungen entfernt werden, und daß danach die regenerierten Halogenide ggf. nach Zusatz frischer Halogenide in der Reinigungsstation erneut mit den zu reinigenden Stoffen in Kontakt gebracht werden.

Als Halogenide kommen in erster Linie die Chloride und/oder Bromide der genannten Elemente in Frage, also beispielsweise die Tetrachloride oder -bromide des Titans oder Zinns. Als besonders günstig haben sich Siliciumchloride erwiesen, welche mindestens zwei Atome Silicium im Molekül aufweisen, und zwar insbesondere solche, die in flüssiger Form vorgelegt werden können. Als Beispiele seien Siliciumchloride der Formel $Si_nCl_{2n+2}$ mit n = 2 bis 4 genannt, welche einzeln oder im Gemisch eingesetzt werden können. Häufig wird als zusätzliche Mischungskomponente Siliciumtetrachlorid hinzugefügt, welches beispielsweise bei der Siliciumabscheidung als Nebenprodukt in der erforderlichen hohen Reinheit anfällt. Auch die genannten höheren Siliciumchloride treten beispielsweise als Nebenprodukt bei der Trichlorsilanherstellung durch Umsetzung von Chlorwasserstoff mit elementarem Silicium in Form der sogenannten "Hochsieder" auf und können z.B. destillativ aus dem Gemisch isoliert werden. Solche Hochsiedergemische enthalten häufig auch gelöste Anteile von höheren Siliciumchloriden, die jedoch die Wirksamkeit im Sinne der Erfindung nicht stören. Trotz ihrer hohen Oxidationsempfindlichkeit liegt der Vorteil der Siliciumhaloge nide und insbesondere der -chloride darin, daß sie in höchster Reinheit zur Verfügung stehen und nur Elemente enthalten, die ohnehin in den bei der Siliciumabscheidung anfallenden Gasen vorhanden sind, so daß die Gefahr des Einschleppens unzulässiger Verunreinigungen besonders gering ist und nicht erst durch aufwendige Trennungsmaßnahmen ausgeschlossen werden muß.

Um eine möglichst zuverlässige und vollständige Bindung der Verunreinigungen durch Adduktbildung sicherzustellen, sind in der Reinigungsstation Temperaturbedingungen erforderlich, bei denen sowohl eine ausreichende Adduktbildungsrate, als auch eine genügende thermische Stabilität des gebildeten Adduktes gewährleistet ist. Als noch zulässige Obergrenze hat sich in den meisten Fällen ein Wert von ca. 40°C erwiesen, während bei der bevorzugten Vorlage von flüssigen Halogeniden die prinzipiell mögliche Untergrenze im Grunde durch die Gefriertemperatur des jeweils eingesetzten Halogenides oder Halogenidgemisches vorgegeben ist. Diese Temperatur liegt beispielsweise im Falle des Hexachlordisilans bei etwa 2.5°C, des Octachlortrisilans bei etwa -76°C und kann ggf. durch Mischung, z.B. indem ein Anteil Siliciumtetrachlorid zugefügt wird, variiert werden. Bei der Temperatureinstellung ist natürlich darauf zu achten, daß keine der in den zu reinigenden Gasen enthaltenen Komponenten auskondensiert oder gar ausgefroren werden. Die erforderliche Temperatur läßt sich beispielsweise durch Thermostatisierung der Reinigungsstation einstellen und beispielsweise über an der Gefäßaußenwand angebrachte Temperaturfühler überwachen. Bevorzugt wird man Temperaturen im Bereich zwischen etwa -20°C und der Raumtemperatur, also etwa 25°C, einhalten, da sich dann zur Thermostatisierung leicht verfügbare Medien wie z.B. unbeheiztes Wasser oder Eis-Kochsalz-Mischung verwenden lassen und somit der Aufwand besonders gering gehalten werden kann.

Grundsätzlich ist es jedoch auch möglich, die Halogenide in festem Zustand vorzulegen, beispielsweise indem man sie als Flüssigkeit, Suspension oder Lösung auf eine feste Trägersubstanz aufbringt, z.B. aufstreicht oder aufsprüht und verfestigt, sie aus der Gasphase dort niederschlägt oder in fester Form aufträgt. Diese Variante wird mit Vorteil bei Siliciumhalogeniden mit mehr als 4 Atomen Silicium im Molekül angewandt, die unter den in der Reinigungsstation vorhandenen Bedingungen nicht mehr in flüssiger, sondern in fester Form vorliegen. Als Trägersubstanzen kommen inerte und die zu reinigenden Substanzen nicht kontaminierende Stoffe in Frage, wie beispielsweise Partikel oder Formkörper aus Reinstsilicium oder Quarz. Der Vorteil bei dieser Verfahrensweise liegt zum einen darin, daß die Halogenide mit einer großen wirksamen Oberfläche bereitgestellt werden können, während andererseits ihre Rückhaltung wegen des geringen Dampfdruckes wenig Aufwand erfordert.

Als Reinigungsstation können allgemein Reaktionsgefäße verwendet werden, die einen absorptiven Stoffaustausch zwischen den beteiligten Phasen gestatten. In einfacher Weise kann beispielsweise eine Gasphase über ein oder mehrere Gaseinleitungsrohre mit Frittenplatte in die z.B. in einer Gaswaschflasche vorgelegten flüssigen Halogenide eingeleitet werden. Eine andere und vielfach bevorzugte Möglichkeit besteht beispielsweise darin, Gas- und flüssige Phase in einer Anordnung in Kontakt zu bringen, in der die beiden Phasen vorteilhaft im Gegenstrom geführt werden, wie etwa in einem Rieselwäscher. Gegebenenfalls können auch mehrere Waschvorrichtungen hintereinandergeschaltet werden. Liegen die zu reinigenden Stoffe in flüssiger Form vor, was z.B. bei Trichlorsilan der Fall sein kann, wird als Reinigungsstation zweckmäßig eine Destillationskolonne eingesetzt, in deren Sumpf flüssige Halogenide vorgelegt werden. Bei der Destillation kann dann am Kolonnenkopf das gereinigte Trichlorsilan abgenommen werden, während sich im Sumpf die Verunreinigungen anreichern. Zur Regenerierung kann der Sumpf ganz oder teilweise ausgeschleust und in die Regenerierstation überführt werden, was kontinuierlich oder taktweise geschehen kann. Eine elegante Möglichkeit besteht darin, von einem oder mehreren Böden im unteren Bereich der Kolonne das Destillat abzuziehen und über die Regenerierstation wieder in den Kolonnensumpf zurückzuleiten. Solche mit einer Entfernung von n - dotierenden Verunreinigungen verbundene Destillationsvorgänge können grundsätzlich bei Normal-, Über- oder auch Unterdruck durchgeführt werden. Ausschlaggebend ist, daß die Temperatur nicht in den Bereich gesteigert wird, in dem mehr Addukte zersetzt als neu gebildet werden.

Durch die vermutlich in der Art einer Lewis-Säure-Base-Reaktion ablaufende Bildung der Addukte mit den vorgelegten Halogeniden werden den zu reinigenden Stoffen die enthaltenen n - dotierenden Verunreinigungen entzogen und in der Halogenidphase festgehalten. Diese Addukte fallen mit den Halogeniden des Titans und des Zinns meistenteils in fester Form an, was bisweilen ihre Entfernung aus der Reinigungsstation erschweren kann, insbesondere wenn sie sich an Gefäßwandungen absetzen. Die bevorzugt eingesetzten flüssigen Halogenide des Siliciums binden die n - dotierenden Verunreinigungen in Form von flüssigen Addukten, diein der flüssigen Phase gelöst bleiben und mit dieser sich dann dementsprechend leicht und in vorteilhafter Weise aus der Reinigungsstation entfernen lassen.

Grundsätzlich kann der Reinigungsschritt mit ein und derselben Halogenidphase so lange durchgeführt werden, bis deren Sättigungsgrad erreicht ist und keine weiteren Addukte mehr gebildet werden. Dieser Punkt ist beispielsweise daran zu erkennen, daß der Pegel der n - dotierenden Verunreinigungen in dem aus der Reinigungsstation austretenden Gasstrom ansteigt. Dies kann z.B. mit Hilfe von hochempfindlichen Gasdetektoren überwacht werden. Günstiger und im Rahmen der Erfindung bevorzugt ist es jedoch, nicht die maximale Kapazität der z.B. flüssigen Halogenide zur Adduktbildung auszunutzen, um das Risiko eines Durchbruches der Verunreinigungen gering zu halten. Zu diesem Zweck kann man beispielsweise nach Maßgabe des Verunreinigungsgehaltes des zu reinigenden Stoffes und der ggf. in Vorversuchen ermittelten Adduktbildungskapazität des jeweils eingesetzten Halogenides die zweckmäßige Einsatzdauer ermitteln.

Spätestens bei Sättigung, vorteilhaft jedoch schon in einem früheren Stadium, wenn die Adduktbildung etwa 50-90% dieses maximal erzielbaren Wertes erreicht hat, werden die mit Addukten angereicherten vorgelegten Halogenide regeneriert, um die gebundenen Verunreinigungen freizusetzen und danach erneut für den Einsatz in der Reinigungsstation zur Verfügung zu stehen. Dies kann in überraschend einfacher Weise durch Temperatureinwirkung geschehen, und zwar dadurch, daß die Temperatur der flüssigen oder festen Phase über einen bestimmten Grenzwert angehoben wird, oberhalb dessen eine merkliche Zersetzung der Addukte einsetzt. Dieser Grenzwert liegt für Addukte von n - dotierenden Verunreinigungen wie etwa Phosphor- oder Arsenwasserstoff mit Siliciumhalogeniden erfahrungsgemäß bei etwa 60°C. Oberhalb dieser Temperatur kann eine nahezu quantitative Abspaltung beispielsweise des vorher gebundenen Phosphor- oder Arsenwasserstoffes erzielt werden, der dann z.B. mit Hilfe eines Inertgasstromes aus der Regenerierstation ausgetragen werden kann. Die solcherart aufbereiteten adduktarmen Halogenide besitzen danach wieder die Fähigkeit zur Bindung von n - dotierenden Verun reinigungen und können, ggf. nach Zusatz von frischem, unverbrauchtem Halogenid, erneut in der Reinigungsstation zum Einsatz kommen.

Die bei der Regenerierung einwirkende Temperatur kann im Grunde bis zur Siedetemperatur des jeweils verwendeten Halogenides bzw. Halogenidgemisches gesteigert werden. In diesem Temperaturbereich erhöht sich jedoch die Gefahr von Verlusten durch abdampfende Halogenide, sofern keine geeigneten Rückhaltevorrichtungen vorgesehen sind. In der Regel werden daher möglichst niedrige Temperaturen, bevorzugt im Bereich von 60-90°C, eingesetzt, schon um derartige Verluste bzw. den zu ihrer Vermeidung nötigen Aufwand gering zu halten. Vielfach hat sich in diesem Zusammenhang auch der Einsatz von Gemischen bewährt, da sich dann sowohl der Effekt der Siedepunktserhöhung als auch der Gefrierpunktserniedrigung ausnützen läßt. So läßt sich beispielsweise durch Zufügen von etwa 10-30 Gew% Siliciumtetrachlorid zu Hexachlordisilan dessen relativ hoher Schmelzpunkt (ca. 2.5°C) soweit erniedrigen, daß in der Reinigungsstation in dem günstigen Bereich bis etwa -20°C gearbeitet werden kann. Gleichzeitig erhöht sich der Siedepunkt des Gemisches, so daß auch bei einer Regeneriertemperatur von beispielsweise 60-65°C nicht mit einem zu raschen Abdampfen des Siliciumtetrachlorids (Siedepunkt ca. 57.6°C) gerechnet werden muß. Der für eine Regenerierung in dem jeweils gewünschten Umfang erforderliche Zeitaufwand wird zweckmäßig an Hand von Vorversuchen ermittelt und kann von Fall zu Fall entsprechend angepaßt werden.

Als Regenerierstation kommen allgemein Anordnungen in Frage, die es gestatten, eine flüssige Phase zu- bzw. abzuführen und diese der Einwirkung einer bestimmten Temperatur oder Temperaturabfolge auszusetzen sowie dabei entstehende gasförmige Produkte ggf. unter Rückhaltung von Dämpfen der Flüssigkeit kontrolliert entweichen zu lassen. Solche Anordnungen können beispielsweise in der Art eines Rückflußkühlers oder einer Kolonne gestaltet sein, worin die zu regenerierenden, z.B. in flüssiger Form vorliegenden Halogenide für die vorgesehene Zeit am Rückfluß erhitzt werden. Dabei werden die Addukte aufgespalten, und die n - dotierenden Verunreinigungen werden in die Gasphase freigesetzt und können ggf. mit Hilfe eines Inertgasstroms aus der Regenerierstation ausgetragen werden. In analoger Weise kann verfahren werden, wenn bei Temperaturen unterhalb des Siedepunktes gearbeitet wird. Die verbleibenden regenerierten flüssigen Halogenide können schließlich wieder in die Reinigungsstation eingeleitet werden. Grundsätzlich ist bei den genannten Verfahrensschritten auch nicht ausgeschlossen, vom Normaldruck nach oben oder unten abweichende Druckwerte einzustellen.

Die Verunreinigungen, wie etwa Phosphor- oder Arsenwasserstoff, lassen sich anschließend in einer nachgeschalteten Auffangstation mit Hilfe geeigneter Wasch- oder Filtermedien binden, beispielsweise indem der die Regenerierstation verlassende Gasstrom in einen mit Natrium-oder Kaliumhypochloritlösung beladenen Wäscher eingeleitet wird. Bei Verwendung von inerten Trägergasen, in der Regel Stickstoff oder Edelgase wie Argon, kann der Gasstrom danach erneut durch die Regenerierstation geleitet werden. Somit kann auch die Abgabe etwa anfallender umweltschädlicher Verbindungen äußerst gering gehalten werden. Eine andere Möglichkeit besteht darin, die oft in hoher Reinheit anfallenden Verunreinigungen in der Auffangstation anzureichern und als an sich wertvolle Chemikalien einer anderweitigen Verwertung zuzuführen.

Das erfindungsgemäße Verfahren kann in der Weise durchgeführt werden, daß in den Strom des zu reinigenden Gases oder Gasgemisches eine Reinigungsstation eingebaut wird, aus welcher die vorgelegten flüssigen Halogenide kontinuierlich oder taktweise zur Regenerierung in eine separate Regenerierstation eingeleitet werden können, wobei aus dieser jeweils eine entsprechende Menge regenerierten Materials, das ggf. durch frische flüssige Halogenide ergänzt sein kann, in die Reinigungsstation zurückgeleitet wird. Denkbar sind auch Varianten, bei denen die Reinigung und Regenerierung jeweils aufeinanderfolgend in ein und derselben Station erfolgt. Dabei wird der Reinigungsschritt bei einer entsprechend tiefen Temperatur gefahren, und dann nach Unterbrechung des zu reinigenden Gasstromes die Temperatur entsprechend gesteigert und der Regenerierungsschritt durchgeführt. Anschließend kann erneut der zu reinigende Gasstrom eingeleitet werden. Werden parallel zwei oder mehrere derartige Anordnungen mit zusammengefaßter Reinigungs- und Regenerierstation vorgesehen, braucht der zu reinigende Gasstrom nicht unterbrochen zu werden, sondern kann jeweils durch die im Reinigungsbetrieb gefahrene Station geleitet werden, während parallel dazu regeneriert werden kann. Eine solche Vorgehensweise empfiehlt sich vor allem in den Fällen, in denen beim Reinigungsschritt feste Addukte anfallen, deren Entfernung aus der Reinigungsstation schwierig ist, beispielsweise weil sie an der Gefäßwand haften. Diese hier genannten Varianten sind nur im Sinne von Beispielen, nicht aber im Sinne einer Beschränkung des Erfindungsgedankens zu verstehen. Sie lassen sich sinngemäß auch auf die Fälle übertragen, in denen der zu reinigende Stoff in flüssiger Form vorliegt oder das Halogenid in fester Form.

Mit Hilfe des erfindungsgemäßen Verfahrens gelingt es in einfacher und umweltfreundlicher Weise, aus bei der Gasphasenabscheidung von Silicium in flüssiger oder Gasform anfallenden Stoffen oder Stoffgemischen, welche als Hauptbestandteile insbesondere Wasserstoff, Trichlorsilan oder Siliciumtetrachlorid enthalten, n - dotierende Verunreinigungen insbesondere auf Basis von Phosphor- und/oder Arsenverbindungen zu entfernen.

Nachstehend wird das erfindungsgemäße Verfahren an Hand von Ausführungsbeispielen näher erläutert:

Beispiel 1:

In einer in Form eines temperierbaren Gaswäschers gestalteten Reinigungsstation wurden in einer Menge von jeweils ca. 100 ml flüssiges Hexachlordisilan bzw. Hexachlordisilan/Siliciumtetrachloridgemische vorgelegt. Die dabei eingestellten Temperaturen und Mischungsverhältnisse sind in der Tabelle 1 dargestellt.

Durch diesen Gaswäscher wurde ein verschiedene Anteile Phosphorwasserstoff ($PH_3$) enthaltender Wasserstoffstrom geleitet, der in seiner Zusammensetzung den bei der Siliciumherstellung nach Abtrennung der enthaltenen Chlorsilane und des Chlorwasserstoffes anfallenden Gasgemischen entsprach. Vor und nach dem Durchgang durch die Reinigungsstation wurde der $PH_3$-Gehalt des Gasstromes mit Hilfe gaschromatographischer Methoden bestimmt. Aus dieser Differenz und der jeweils eingestellten Durchflußrate konnte abgeschätzt werden, nach welcher Zeitdauer eine Adduktbildungsrate von etwa 75% des in Vorversuchen ermittelten maximalen Wertes erreicht war. Die dabei gemessenen Werte können der Tabelle 1 entnommen werden.

Nun wurde die in dem Gaswäscher enthaltene Flüssigkeit über eine Zuleitung in die Regenerierstation, einen mit einem Kühler versehenen und auf die in der Tabelle 1 angegebene Temperatur thermostatisierten Rezipienten, eingeleitet. Gleichzeitig wurde aus der Regenerierstation die entsprechende Menge regenerierter Flüssigkeit in die Reinigungsstation zurückgeleitet, so daß der Reinigungsprozeß mit dieser Charge in analoger Weise weitergeführt werden konnte. Beide Flüssigkeitsströme wurden im Gegenstrom über einen Wärmetauscher geführt, so daß sie sich gegenseitig vorkühlen bzw. vorwärmen konnten.

In der Regenerierstation wurde nun die Temperatur der eingebrachten Flüssigkeit auf die in Tabelle 1 angegebenen Werte gesteigert, wodurch der in den Addukten gebundene Phosphorwasserstoff nach und nach annähernd quantitativ in die Gasphase freigesetzt wurde und mit Hilfe eines über die Flüssigkeitsoberfläche streichenden Stickstoffstromes in eine nachgeschaltete, mit Natriumhypochloritlösung beschickte Auffangstation in Form eines Gaswäschers eingeleitet werden konnte. In dem schließlich austretenden Stickstoffstrom, der grundsätzlich auch in einem Kreislauf geführt werden könnte, ließ sich kein Phosphorwasserstoff mehr nachweisen. Die Regenerierungsbedingungen wurden so lange beibehalten, bis in der Reinigungsstation die angestrebte Adduktbildungsrate erreicht war. Danach wurden die in beiden Stationen vorliegenden Flüssigkeitsmengen erneut ausgetauscht. In analoger Weise wurden insgesamt 20 Zyklen gefahren, ohne daß ein Anstieg des Phosphorwasserstoffgehaltes in dem gereinigten Wasserstoff beobachtet werden konnte.

Beispiel 2:

In einem temperierbaren Gaswäscher wurden ca 200 ml flüssiges Zinntetrachlorid vorgelegt und auf eine Temperatur von ca $0°C$ eingestellt. Über ein Gaseinleitungsrohr mit Frittenplatte wurde der zu reinigende Gasstrom, ein ca. 4.7 Vol% Trichlorsilan und etwa 20 000 ppm Phosphorwasserstoff enthaltender Wasserstoffstrom, durch die Flüssigkeit geperlt. Die Verweilzeit betrug ca. 1 sec in der flüssigen und ca. 10 sec in der Gasphase der Reinigungsstation. Danach durchlief der Gasstrom einen Trockeneiskühler (Kühltemperatur ca. $-78°C$), sowie einen mit Natronplätzchen und einen mit Phosphorpentoxid beschickten Absorber, ehe er zur Detektion des verbliebenen Phosphorwasserstoffes in einen Gaschromatographen gelangte. Dort ließ sich kein Phosphorwasserstoff mehr feststellen, d.h. der Gehalt lag unterhalb der Nachweisgrenze von ca. 1 ppm.

In der Reinigungsstation begann sich ein festes, gelboranges Addukt zu bilden, das sich in der flüssigen Phase verteilte. Diese Adduktbildung wurde so lange fortgesetzt, bis im Gaschromatographen ein Anstieg des Phosphorwasserstoffpegels festgestellt werden konnte. Nun wurde die Zufuhr des zu reinigenden Gases unterbrochen, und statt dessen ein leichter Stickstoffstrom eingeblasen, der danach durch einen mit Natriumhypochloritlösung beschickten Wäscher geleitet wurde. Bei Erhöhung der Temperatur auf etwa $90°C$ in der nunmehr als Regenerierstation fungierenden Reinigungsstation begann der gebildete gelborange Niederschlag allmählich zu verschwinden, und der dabei freigesetzte Phosphorwasserstoff wurde mit dem Gasstrom ausgetragen und in der nachgeschalteten Auffangstation vernichtet.

Nachdem visuell keine gelborange Farbe in der Flüssigkeit mehr festzustellen war, wurde der Stickstoffstrom unterbrochen, die Temperatur auf $0°C$ abgesenkt und erneut der zu reinigende Gasstrom eingeleitet. Innerhalb kurzer Zeit setzte die an der Bildung eines orangeroten Niederschlages erkennbare Adduktbildung wieder ein; der im Gaschromatographen überwachte Gasstrom war phosphorwasserstofffrei. Dieser Zyklus ließ sich ohne Probleme mehrmals wiederholen.

Beispiel 3:

In der in Beispiel 2 beschriebenen Anordnung wurde unter ansonsten gleichen Bedingungen als Halogenid eine Menge von 200 ml Titantetrachlorid vorgelegt. Der zu reinigende Gasstrom war Wasserstoff mit einem Anteil von 400 ppm Phosphorwasserstoff.

In der Reinigungsstation bildete sich ein festes, rotbraunes Addukt, während sich im resultierenden Gasstrom gaschromatographisch kein Phosphorwasserstoff nachweisen ließ.

Sowohl der Reinigungsschritt (Temperatur: $0°C$) als auch der Regenerierungsschritt (Temperatur: $80°C$) wurden analog dem in Beispiel 2 angegebenen Verfahren durchgeführt und ließen sich ohne Problem mehrmals wiederholen.

Beispiel 4:

In einer Destillationskolonne wurde als zu reinigender Stoff flüssiges Trichlorsilan vorgelegt, dem ca. 5 Gew% eines thermisch nicht behandelten flüssigen Hochsiedergemisches zugeschlagen waren, welches hauptsächlich aus Siliciumchloriden mit 2-4 Atomen Silicium im Molekül bestand. Die Mischung wurde durch 20-minütiges Durchleiten eines mit 0.5 Vol% Phosphorwasserstoff angereicherten Wasserstoffstromes kontaminiert. Bei der anschließenden Destillation wurde am Kolonnenkopf das Trichlorsilan abgenommen und unter Beimischung von Wasserstoff in eine Testabscheideanlage eingeleitet, wo es auf einem dünnen Siliciumstab unter Abscheidung von elementarem Silicium zersetzt wurde. Das dabei erhaltene Silicium besaß einen spezifischen Widerstand von 30 Ohm cm (n-Typ), was einem Phosphorgehalt von ca. 1.5 $\cdot 10^{14}$ Atomen $P/cm^3$ entspricht.

Nachdem aus der Kolonne die Hauptfraktion des Trichlorsilans abdestilliert war, wurden dem Sumpf 3 Gew% thermisch nicht vorbehandelter Hochsieder zugesetzt. Dann wurde die Temperatur im Sumpf zur Regenerierung der Hochsieder auf ca. 85 $^\circ$ C gesteigert und der freigesetzte Phosphorwasserstoff mittels eines Stickstoffstromes aus der Kolonne entfernt.

Danach wurde die Kolonne erneut mit Trichlorsilan beschickt, durch das vorher mit der selben Durchflußrate wie beim Vorversuch ein mit 0.5 Vol% Phosphorwasserstoff angereicherter Wasserstoffstrom geleitet worden war. Der Hochsiederanteil betrug wiederum ca. 5 Gew.%. In analoger Weise wurde bei der anschließenden Destillation das Trichlorsilan abgenommen und einer Testabscheidung zugeleitet. Das erhaltene Silicium hatte einen spezifischen Widerstand von 80 Ohm cm (n-Typ), entsprechend einem P-Gehalt von $5.2 \cdot 10^{13}$ Atomen $P/cm^3$. Dies ist gleichbedeutend mit einer Reduzierung des Verunreinigungsgrades um etwa 65%.

EP 0 329 149 A2

Tabelle 1: Entfernung von Phosphin aus phosphinhaltigem Wasserstoff

| vorgelegtes Halogenid | Temperatur Reinigungsstation (°C) | $PH_3$ maximal gebunden (Mol/l) | $PH_3$-Gehalt vor Reinigung (ppm) | $PH_3$-Gehalt nach Reinigung (ppm) | Temperatur Regenerierstat. (°C) |
|---|---|---|---|---|---|
| $Si_2Cl_6$ | 20 | $1.3 \cdot 10^{-3}$ | 5000 | < 1 | 75 |
| 90 Gew.% $Si_2Cl_6$ 10 Gew.% $SiCl_4$ | − 20 | $4.0 \cdot 10^{-3}$ | 10000 | < 1 | 65 |
| 70 Gew.% $Si_2Cl_6$ 30 Gew.% $SiCl_4$ | − 40 | $5.7 \cdot 10^{-3}$ | 5000 | < 1 | 65 |

der Gasphasenabscheidung von Silicium anfallenden Stoffen.

**Ansprüche**

1. Verfahren zur Entfernung von n - dotierenden Verunreinigungen aus bei der Gasphasenabscheidung von Silicium anfallenden flüssigen oder gasförmigen Stoffen, dadurch gekennzeichnet, daß die Stoffe eine Reinigungsstation durchlaufen, in der sie mit vorgelegten Halogeniden der Elemente Silicium, Titan oder Zinn in Kontakt gebracht werden, wobei ihnen durch Bildung von Addukten die Verunreinigungen entzogen werden,
daß spätestens bei ihrer Sättigung mit Addukten die vorgelegten Halogenide zumindest teilweise in einer Regenerierstation einer Temperaturbehandlung unterworfen werden, bei der die Addukte zumindest teilweise gespalten und die dabei freigesetzten Verunreinigungen entfernt werden,
und daß danach die regenerierten Halogenide ggf. nach Zusatz frischer Halogenide erneut mit den zu reinigenden Stoffen in Kontakt gebracht werden.

2. Verfahren nach Anspruch 1, dadurch gekennzeichnet, daß als Halogenide Siliciumchloride mit mindestens 2 Atomen Silicium im Molekül, einzeln oder im Gemisch, eingesetzt werden.

3. Verfahren nach Anspruch 2, dadurch gekennzeichnet, daß flüssige Siliciumchloride eingesetzt werden.

4. Verfahren nach den Ansprüchen 2 oder 3, dadurch gekennzeichnet, daß den Siliciumchloriden Siliciumtetrachlorid beigemischt wird.

5. Verfahren nach den Ansprüchen 1 oder 2, dadurch gekennzeichnet, daß die Halogenide auf eine feste Trägersubstanz aufgebracht werden.

6. Verfahren nach einem oder mehreren der Ansprüche 1 bis 5, dadurch gekennzeichnet, daß in der Reinigungsstation eine Temperatur von 40° C nicht überschritten wird.

7. Verfahren nach einem oder mehreren der Ansprüche 1 bis 6, dadurch gekennzeichnet, daß in der Regenerierstation die Halogenide auf eine Temperatur von mindestens 60° C gebracht werden.

8. Verfahren nach einem oder mehreren der Ansprüche 1 bis 7, dadurch gekennzeichnet, daß die vorgelegten Halogenide der Temperaturbehandlung unterworfen werden, bevor sie den maximal möglichen Gehalt an Addukten erreicht haben.

9. Verfahren nach einem oder mehreren der Ansprüche 1 bis 8, dadurch gekennzeichnet, daß die freigesetzten Verunreinigungen in eine nachgeschaltete Auffangstation eingeleitet werden.

10. Verwendung von Siliciumchloriden mit mindestens 2 Atomen Silicium im Molekül zur Abtrennung von n - dotierenden Verunreinigungen aus bei